# EUROPÄISCHE PATENTANMELDUNG

(11) **EP 4 365 873 A1**
(43) Veröffentlichungstag der Anmeldung: **08.05.2024**
(21) Anmeldenummer: 23201765.7
(22) Anmeldetag: 05.10.2023
(51) Int. Cl.: G09B 17/00, G09B 19/06

(54) **SYSTEM UND VERFAHREN ZUR LESEERKENNUNG**

(30) Priorität: 03.11.2022 DE 102022211622
(71) Anmelder: Bookplay GmbH, 69124 Heidelberg (DE)
(72) Erfinder: Heimer, Anna- Kristina, 69124 Heidelberg (DE)
(74) Vertreter: Ullrich & Naumann PartG mbB

(57) **Zusammenfassung**

Ein System und ein Verfahren zur Leseerkennung mit einer ersten Sensoreinheit (2), die dazu ausgebildet ist, Identifikationsdaten eines Schriftstückes (5) zu erfassen, einer Speichereinheit (6), in welcher Textdaten des Schriftstückes (5) mit den entsprechenden Identifikationsdaten zugeordnet abgespeichert sind, einer zweiten Sensoreinheit (3), die dazu ausgebildet ist, Sprachdaten eines Nutzers zu erfassen, einer Spracherkennungseinheit (7), die dazu ausgebildet ist, aus den Sprachdaten Spracherkennungsdaten zu erzeugen, einer Auswerteeinheit (8), die dazu ausgebildet ist, die Textdaten des identifizierten Schriftstückes (5) mit den Spracherkennungsdaten des Nutzers zu vergleichen, um ein Vorlesen eines Textes des Schriftstückes (5) zu erkennen, und einer Erfassungseinheit (9), die dazu ausgebildet ist, die Zeitdauer zu erfassen, in der ein Vorlesen erfolgt ist, und/oder eine Länge des vorgelesenen Textes zu erfassen.

## Beschreibung

Die Erfindung betrifft ein System zur Leseerkennung.

Des Weiteren betrifft die Erfindung ein Verfahren zur Leseerkennung.

Die zu geringe Lesekompetenz von Kindern und Jugendlichen ist ein gesellschaftliches Problem, das seit vielen Jahren nicht zufriedenstellend gelöst werden kann. Beispielsweise wird gemäß einer Studie der Stiftung Lesen aus dem Jahr 2019 in Deutschland in über 30% der Familien nicht regelmäßig laut vorgelesen oder gelesen, was zur Ausbildung einer ausreichenden Lesekompetenz von Experten jedoch als äußerst wichtig angesehen wird. Trotz einer Vielzahl von Leseförderprogrammen bleibt diese Zahl seit Jahren konstant.

Vor dem Hintergrund dieser Studie ist festzustellen, dass bestehende Leseförderungsangebote insbesondere in Deutschland die kritische Masse nicht ausreichend erreicht. Ein Grund hierfür liegt in dem von Kindern als "spannender" empfundenen Konsum neuer Medien. Dies wird dadurch verstärkt, dass es für viele Eltern mit einem geringeren Aufwand verbunden ist, wenn ihr Kind alleine entsprechende Medien konsumiert, ohne dass eine Betreuung notwendig ist.

Der vorliegenden Erfindung liegt die Aufgabe zugrunde, ein System und ein Verfahren zur Leseerkennung anzugeben.

Erfindungsgemäß wird die voranstehende Aufgabe in Bezug auf das System durch die Merkmale des Anspruches 1 gelöst. Damit ist ein System zur Leseerkennung angegeben, mit einer ersten Sensoreinheit, die dazu ausgebildet ist, Identifikationsdaten eines Schriftstückes zu erfassen, einer Speichereinheit, in welcher Textdaten des Schriftstückes mit den entsprechenden Identifikationsdaten zugeordnet abgespeichert sind, einer zweiten Sensoreinheit, die dazu ausgebildet ist, Sprachdaten eines Nutzers zu erfassen, einer Spracherkennungseinheit, die dazu ausgebildet ist, aus den Sprachdaten Spracherkennungsdaten zu erzeugen, einer Auswerteeinheit, die dazu ausgebildet ist, die Textdaten des identifizierten Schriftstückes mit den Spracherkennungsdaten des Nutzers zu vergleichen, um ein Vorlesen eines Textes des Schriftstückes zu erkennen, und einer Erfassungseinheit, die dazu ausgebildet ist, die Zeitdauer zu erfassen, in der ein Vorlesen erfolgt ist, und/oder eine Länge des vorgelesenen Textes zu erfassen.

In Bezug auf das Verfahren wird die voranstehende Aufgabe durch die Merkmale des nebengeordneten Anspruchs 9. gelöst. Damit ist ein Verfahren zur Leseerkennung, insbesondere unter Nutzung eines Systems nach einem der Ansprüche 1 bis 8, beansprucht, wobei von einer ersten Sensoreinheit Identifikationsdaten eines Schriftstückes erfasst werden, wobei von einer zweiten Sensoreinheit Sprachdaten eines Nutzers erfasst werden, wobei von einer Spracherkennungseinheit aus den Sprachdaten Spracherkennungsdaten erzeugt werden, wobei in einer Speichereinheit Textdaten des Schriftstückes mit den entsprechenden Identifikationsdaten zugeordnet abgespeichert sind, wobei von einer Auswerteeinheit die Textdaten des identifizierten Schriftstückes mit den Spracherkennungsdaten des Nutzers verglichen werden, um ein Vorlesen eines Textes des Schriftstückes zu erkennen, und wobei von einer Erfassungseinheit die Zeitdauer, in der ein Vorlesen erfolgt ist, erfasst wird, und/oder eine Länge des vorgelesenen Textes, erfasst wird.

Der Erfindung liegt die Erkenntnis zugrunde, dass zur Erlangung einer ausreichenden Lesekompetenz das laute Lesen durch das Kind sowie das Vorlesen durch eine Betreuungsperson von erheblicher Relevanz ist. Durch die erfindungsgemäße Lehre wird ein System und ein Verfahren angegeben, mit welchem ein Vorlesen bzw. lautes Lesen erkannt und insbesondere die Zeitdauer des Vorlesens und/oder die Länge des vorgelesenen Textes erfasst werden kann. Somit ist es durch die erfindungsgemäße Lehre in einfacher Weise möglich, eine "Tracken" des Vorlesens zu erreichen. Dadurch kann beispielsweise kontrolliert werden, ob das Kind den Empfehlungen entsprechend oft bzw. lang liest oder vorgelesen bekommt. Wesentlich ist dabei, dass das vorgelesene Schriftstück identifiziert wird und dass zu dem identifizierten Schriftstück Textdaten in der Speichereinheit vorliegen, die mit den Spracherkennungsdaten verglichen werden können.

Der Begriff "Schriftstück" ist im Rahmen der vorliegenden Offenbarung im weitesten Sinne zu verstehen, kann es sich beispielsweise um ein Buch, ein Heft, eine Zeitschrift oder ein beliebiges anderes Medium handeln, das einen Text aufweist, der vorgelesen bzw. laut gelesen werden kann.

In vorteilhafter Weise kann die erste Sensoreinheit dazu ausgebildet sein, einen Strichcode, einen 2D-Code, einen RFID-Tag, einen NFC-Tag, einen Text und/oder eine Grafik zu erfassen. Bei der Sensoreinheit kann es sich beispielsweise um eine Kamera bzw. einen RFID- und/oder NFC-Reader handeln. Auch ist es denkbar, dass über eine Kamera ein Bild des Schriftstückes aufgenommen wird, anhand dessen das Schriftstück identifizierbar ist. Wesentlich ist dabei, dass eine eindeutige Identifikation des Schriftstückes gewährleistet ist. Alternativ oder zusätzlich kann die zweite Sensoreinheit als Mikrofon ausgebildet sein.

In weiter vorteilhafter Weise kann eine Bewertungseinheit angeordnet sein, die dazu ausgebildet ist, die Textdaten des identifizierten Schriftstückes mit den Spracherkennungsdaten des Nutzers zu vergleichen, um korrekt und/oder unkorrekt vorgelesene Wörter zu erkennen und auf dieser Grundlage Bewertungsdaten zu erzeugen. Anhand der Bewertungsdaten kann eine Rückmeldung an den Nutzer - insbesondere ein Kind - erfolgen, ob der Text fehlerfrei vorgelesen worden ist.

In besonders vorteilhafter Weise kann eine Bonuseinheit angeordnet sein, die dazu ausgebildet ist, anhand der erfassten Zeitdauer des Vorlesens und/oder der erfassten Länge des vorgelesenen Textes und/oder der Bewertungsdaten und/oder der Identifikationsdaten Bonusdaten zu erzeugen. Für die Bonusdaten können beispielsweise "Lesepunkte" vergeben werden, wobei der Nutzer spielerisch animiert wird, möglichst viele Lesepunkte zu sammeln. Alternativ oder zusätzlich ist es denkbar, dass durch die Bonusdaten Wertgutscheine, Rabattgutscheine oder ähnliches "freigelesen" werden können, die insbesondere zum Einkauf, beispielsweise eines Buches, genutzt werden können. Dadurch kann auch ein ökonomischer Anreiz geschaffen werden, die Dauer, Länge und/oder Qualität des Vorlesens bzw. laut Lesens zu erhöhen. Bei der Erzeugung der Bonusdaten ist es auch denkbar, dass die vorlesende Person und/oder ein Schwierigkeitsgrad des vorgelesenen Textes berücksichtigt wird. Beispielsweise kann ein Kind, das einen besonders schwierigen Text vorliest, mit einer größeren Anzahl von "Lesepunkten" o.ä. belohnt werden als ein Erwachsener, der den gleichen Text vorliest. Auch hierbei kann zusätzlich die Anzahl der Fehler etc. berücksichtigt werden.

Gemäß einer vorteilhaften Ausgestaltung ist es denkbar, dass eine Identifikationseinheit angeordnet ist, die dazu ausgebildet ist, anhand der Sprachdaten Nutzeridentifikationsdaten zu erzeugen, anhand der ein Nutzer identifizierbar ist. Beispielsweise kann dadurch erkannt werden, ob ein Kind oder eine erwachsene Person das Schriftstück vorliest. Auch könnte eine Person als solche erkannt werden. Dies hat den Vorteil, dass die Länge, Dauer oder Qualität des vorgelesenen Textes sowie etwaige Bonuspunkte dem passenden "Vorleser" zugeordnet werden können. Auch kann der "Vorleser" bei der Vergabe der Bonuspunkte berücksichtigt werden.

In weiter vorteilhafter Weise kann eine Anzeigeeinrichtung angeordnet sein, beispielsweise ein Display. Diese kann dazu ausgebildet sein, die Spracherkennungsdaten und/oder die Nutzeridentifikationsdaten und/oder die Bewertungsdaten und/oder die Bonusdaten und/oder die Zeitdauer des vorgelesenen Textes und/oder die Länge des vorgelesenen Textes anzuzeigen. Ein Vorteil einer solchen konstruktiven Ausgestaltung liegt darin, dass der Nutzer ein "Feedback" zu relevanten Informationen betreffend den vorgelesenen Text sowie etwaiger Fortschritte erhalten kann. Auch könnten nach dem Vorlesen die falsch gelesenen Wörter bzw. Textabschnitte angezeigt werden, so dass diese nochmals - richtig - vorgelesen werden können.

Des Weiteren ist es denkbar und von Vorteil, wenn die erste Sensoreinheit und/oder die zweite Sensoreinheit und/oder die Speichereinheit und/oder die Spracherkennungseinheit und/oder die Auswerteeinheit und/oder die Erfassungseinheit und/oder die Bewertungseinheit und/oder die Bonuseinheit und/oder die Identifikationseinheit und/oder die Anzeigeeinrichtung durch ein, vorzugsweise mobiles, Endgerät, beispielsweise ein Tablet-PC oder ein Smartphone, realisiert ist/sind. Es ist jedoch auch denkbar, dass zumindest eine oder mehrere der voranstehenden Einheiten durch einen Server bzw. eine Cloud gebildet sind, mit welchen beispielsweise über ein mobiles Endgerät über ein Netzwerk kommuniziert werden kann. Im Konkreten könnten die erste und zweite Sensoreinheit und ggf. die Anzeigeeinrichtung durch ein mobiles Endgerät realisiert sein, wobei dieses mit einem Server kommuniziert, der die Speichereinheit, die Auswerteeinheit, die Erfassungseinheit und ggf. die Bewertungseinheit, die Bonuseinheit und/oder die Erfassungseinheit realisiert.

Es wird darauf hingewiesen, dass das erfindungsgemäße System auch eine verfahrensmäßige Ausprägung aufweisen kann. Die voranstehend und in der nachstehenden Figurenbeschreibung beschriebene Merkmale und damit erzielten Vorteile des Systems können ausdrücklich Teil des erfindungsgemäßen Verfahrens sein.

Die vorliegende Erfindung betrifft des Weiteren ein nicht-flüchtiges computer-lesbares Medium, welches ein Programm speichert, das einen Computer veranlasst, ein Verfahren zur Leseerkennung, wobei von einer ersten Sensoreinheit Identifikationsdaten eines Schriftstückes erfasst werden, wobei von einer zweiten Sensoreinheit Sprachdaten eines Nutzers erfasst werden, wobei von einer Spracherkennungseinheit aus den Sprachdaten Spracherkennungsdaten erzeugt werden, wobei in einer Speichereinheit Textdaten des Schriftstückes mit den entsprechenden Identifikationsdaten zugeordnet abgespeichert sind, wobei von einer Auswerteeinheit die Textdaten des identifizierten Schriftstückes mit den Spracherkennungsdaten des Nutzers verglichen werden, um ein Vorlesen eines Textes des Schriftstückes zu erkennen, und wobei von einer Erfassungseinheit die Zeitdauer, in der ein Vorlesen erfolgt ist, und/oder eine Länge des vorgelesenen Textes, erfasst wird, durchzuführen.

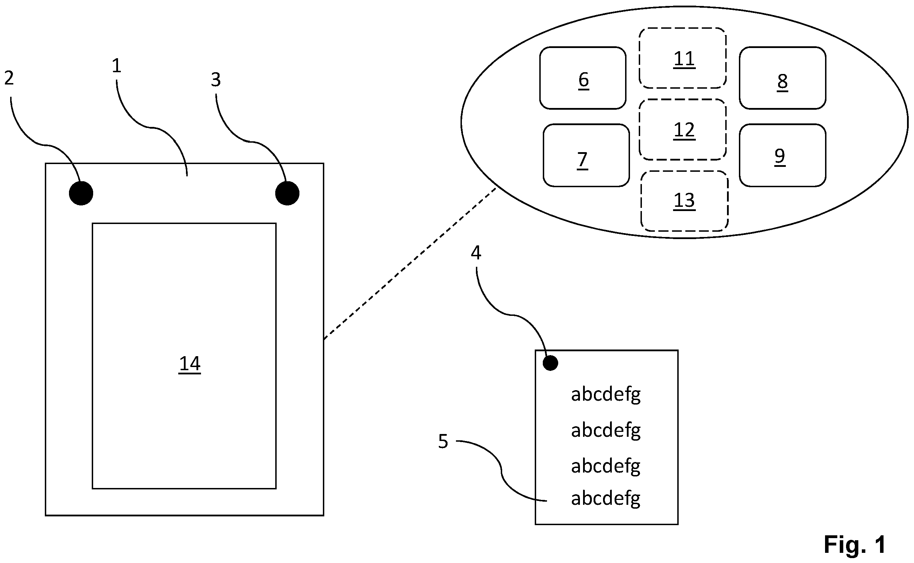

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 8 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Darstellung ein Ausführungsbeispiel eines erfindungsgemäßen Systems, an dem auch das erfindungsgemäße Verfahren erläutert wird.

In Fig. 1 ist ein Ausführungsbeispiel eines erfindungsgemäßen Systems dargestellt. Dieses weist ein, vorzugsweise mobiles, Endgerät 1 mit einer ersten Sensoreinheit 2 und einer zweiten Sensoreinheit 3 auf. Das Endgerät 1 könnte beispielsweise als Smartphone oder Tablet-PC ausgebildet sein. Bei der ersten Sensoreinheit 2 kann es sich beispielsweise um eine Kamera, einen RFID-Reader, einen NFC-Reader oder ähnliches handeln, mit der ein Strichcode (Barcode) oder ein 2D-Code (QR-Code) oder ein RFID/NFC-Tag 4 eines Schriftstückes 5 ausgelesen werden kann, um Identifikationsdaten des Schriftstückes 5 zu erfassen. Bei dem Schriftstück 5 kann es sich beispielsweise um ein Buch handeln.

Die zweite Sensoreinheit 3 dient dazu, Sprachdaten eines Nutzers zu erfassen und kann somit als Mikrofon ausgebildet sein.

In dem hier dargestellten Ausführungsbeispiel sind des Weiteren eine Speichereinheit 6, eine Spracherkennungseinheit 7, eine Auswerteeinheit 8 und eine Erfassungseinheit 9 vorgesehen, die in einem externen Server bzw. einer Cloud 10 realisiert sein können. Dies muss nicht zwangsweise der Fall sein. Es ist auch denkbar, dass wenigstens eine dieser Einheiten in dem Endgerät 1 ausgebildet ist.

Des Weiteren können in dem externen Server bzw. der Cloud 10 auch eine Bewertungseinheit 11, eine Bonuseinheit 12 und/oder eine Identifikationseinheit 13 vorgesehen sein. Auch diese Einheiten können insgesamt oder teilweise in dem Endgerät 1 vorgesehen sein.

Ein Nutzer kann somit zunächst mit der ersten Sensoreinheit 2 die Identifikationsdaten 4 des Schriftstückes 5 erfassen. Die Identifikationsdaten 4 werden an den externen Server bzw. die Cloud 10 übermittelt, um aus der Speichereinheit 6 die den Identifikationsdaten entsprechenden Textdaten an die Auswerteeinheit 8 zu übermitteln. Sobald der Nutzer vorliest, wird dies von der zweiten Sensoreinrichtung 3 erfasst und die entsprechenden Sprachdaten an die Spracherkennungseinheit 7 übermittelt. Die Spracherkennungseinheit 7 erzeugt aus den Sprachdaten Spracherkennungsdaten, die in der Auswerteeinheit 8 mit den Textdaten verglichen werden, um ein Vorlesen eines Textes zu erkennen.

Durch die Erfassungseinheit 9 wird dabei die Zeitdauer erfasst, während der vorgelesen wird und/oder die Länge des vorgelesenen Textes, beispielsweise die Anzahl der Wörter oder der Buchseiten.

Des Weiteren ist an dem Endgerät 1 eine Anzeigeeinrichtung14, beispielsweise eine Display, angeordnet, mit der die erfasste Zeitdauer, die erfasste Länge des vorgelesenen Textes, das vorgelesene Schriftstück sowie ggf. weitere Informationen dargestellt werden können.

Durch die Bewertungseinheit 11 ist es möglich, die Textdaten des erkannten Schriftstückes 5 mit den Spracherkennungsdaten des Nutzers dahingehend zu vergleichen, ob der Text korrekt vorgelesen worden ist bzw. ob Wörter falsch vorgelesen worden sind. Die auf dieser Grundlage erzeugten Bewertungsdaten können auf der Anzeigeeinrichtung 14 dargestellt werden.

Zusätzlich können über die Bonuseinheit 12 Bonusdaten erzeugt werden, nämlich auf Grundlage der erfassten Zeitdauer bzw. Textlänge und/oder der Bewertungsdaten und/oder des Schwierigkeitsgrads des Textes. Auch ist es denkbar, dass durch die Identifikationseinheit 13 erkannt wird, ob ein Kind oder eine erwachsene Person vorliest, und können die entsprechenden Identifikationsdaten in der Bewertungseinheit berücksichtigt werden. Somit könnte beispielsweise ein Kind, das für eine lange Zeit einen besonders schwierigen Text vorliest eine hohe Anzahl von "Lesepunkten" oder ähnliches erhalten.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Endgerät
- 2: erste Sensoreinheit
- 3: zweite Sensoreinheit
- 4: Barcode/ RFID/NFC-Tag
- 5: Schriftstück
- 6: Speichereinheit
- 7: Spracherkennungseinheit
- 8: Auswerteeinheit
- 9: Erfassungseinheit
- 10: Server/Cloud
- 11: Bewertungseinheit
- 12: Bonuseinheit
- 13: Identifikationseinheit
- 14: Anzeige

## Patentansprüche

1. System zur Leseerkennung mit
einer ersten Sensoreinheit (2), die dazu ausgebildet ist, Identifikationsdaten eines Schriftstückes (5) zu erfassen,
einer Speichereinheit (6), in welcher Textdaten des Schriftstückes (5) mit den entsprechenden Identifikationsdaten zugeordnet abgespeichert sind,
einer zweiten Sensoreinheit (3), die dazu ausgebildet ist, Sprachdaten eines Nutzers zu erfassen,
einer Spracherkennungseinheit (7), die dazu ausgebildet ist, aus den Sprachdaten Spracherkennungsdaten zu erzeugen,
einer Auswerteeinheit (8), die dazu ausgebildet ist, die Textdaten des identifizierten Schriftstückes (5) mit den Spracherkennungsdaten des Nutzers zu vergleichen, um ein Vorlesen eines Textes des Schriftstückes (5) zu erkennen, und
einer Erfassungseinheit (9), die dazu ausgebildet ist, die Zeitdauer zu erfassen, in der ein Vorlesen erfolgt ist, und/oder eine Länge des vorgelesenen Textes zu erfassen.

2. System nach Anspruch 1, **dadurch gekennzeichnet, dass** die erste Sensoreinheit (2) dazu ausgebildet ist, einen Strichcode (4), einen 2D-Code, einen RFID-Tag, einen NFC-Tag, einen Text und/oder eine Grafik zu erfassen.

3. System nach Anspruch 1 oder 2, **dadurch gekennzeichnet, dass** eine Bewertungseinheit (11) angeordnet ist, die dazu ausgebildet ist, die Textdaten des identifizierten Schriftstückes (5) mit den Spracherkennungsdaten des Nutzers zu vergleichen, um korrekt und/oder unkorrekt vorgelesene Wörter zu erkennen und auf dieser Grundlage Bewertungsdaten zu erzeugen.

4. System nach einem der Ansprüche 1 bis 3, **dadurch gekennzeichnet, dass** eine Identifikationseinheit (13) angeordnet ist, die dazu ausgebildet ist, anhand der Sprachdaten Nutzeridentifikationsdaten zu erzeugen, anhand der ein Nutzer identifizierbar ist.

5. System nach einem der Ansprüche 1 bis 4, **dadurch gekennzeichnet, dass** eine Bonuseinheit (12) angeordnet ist, die dazu ausgebildet ist, anhand der erfassten Zeitdauer des Vorlesens und/oder der erfassten Länge des vorgelesenen Textes und/oder der Bewertungsdaten Bonusdaten und/oder der Identifikationsdaten zu erzeugen.

6. System nach einem der Ansprüche 1 bis 5, **dadurch gekennzeichnet, dass** eine Anzeigeeinrichtung (14) angeordnet ist, die dazu ausgebildet ist, die Spracherkennungsdaten und/oder die Nutzeridentifikationsdaten und/oder die Bewertungsdaten und/oder die Bonusdaten und/oder die Zeitdauer des vorgelesenen Textes und/oder die Länge des vorgelesenen Textes anzuzeigen.

7. System nach einem der Ansprüche 1 bis 6, **dadurch gekennzeichnet, dass** die erste Sensoreinheit (2) und/oder die zweite Sensoreinheit (3) und/oder die Speichereinheit (6) und/oder die Spracherkennungseinheit (7) und/oder die Auswerteeinheit (8) und/oder die Erfassungseinheit (9) und/oder die Bewertungseinheit (11) und/oder die Bonuseinheit und/oder die Identifikationseinheit (13) und/oder die Anzeigeeinrichtung (14) durch ein, vorzugsweise mobiles, Endgerät (1), beispielsweise ein Tablet-PC oder ein Smartphone, realisiert ist/sind.

8. Verfahren zur Leseerkennung, insbesondere unter Nutzung eines Systems nach einem der Ansprüche 1 bis 7,
wobei von einer ersten Sensoreinheit (2) Identifikationsdaten eines Schriftstückes (5) erfasst werden,
wobei von einer zweiten Sensoreinheit (3) Sprachdaten eines Nutzers erfasst werden, wobei von einer Spracherkennungseinheit (7) aus den Sprachdaten Spracherkennungsdaten erzeugen werden,
wobei in einer Speichereinheit (6) Textdaten des Schriftstückes (5) mit den entsprechenden Identifikationsdaten zugeordnet abgespeichert sind,
wobei von einer Auswerteeinheit (8) die Textdaten des identifizierten Schriftstückes (5) mit den Spracherkennungsdaten des Nutzers verglichen werden, um ein Vorlesen eines Textes des Schriftstückes (5) zu erkennen, und
wobei von einer Erfassungseinheit (9) die Zeitdauer, in der ein Vorlesen erfolgt ist, erfasst wird, und/oder eine Länge des vorgelesenen Textes, erfasst wird.

9. Verfahren nach Anspruch 8, **dadurch gekennzeichnet, dass** von einer Bewertungseinheit (11) die Textdaten des identifizierten Schriftstückes (5) mit den Spracherkennungsdaten des Nutzers verglichen werden, so dass korrekt und/oder unkorrekt vorgelesene Wörter erkannt werden und auf dieser Grundlage Bewertungsdaten erzeugt werden.

10. System nach Anspruch 8 oder 9, **dadurch gekennzeichnet, dass** von einer Bonuseinheit (12) anhand der erfassten Zeitdauer des Vorlesens und/oder der erfassten Länge des vorgelesenen Textes und/oder der Bewertungsdaten Bonusdaten werden.

11. Nicht-flüchtiges, computer-lesbares Medium, welches ein Programm speichert, das einen Computer veranlasst, ein Verfahren zur Leseerkennung, wobei von einer ersten Sensoreinheit (2) Identifikationsdaten eines Schriftstückes (5) erfasst werden,
wobei von einer zweiten Sensoreinheit (3) Sprachdaten eines Nutzers erfasst werden, wobei von einer Spracherkennungseinheit (7) aus den Sprachdaten Spracherkennungsdaten erzeugen werden,
wobei in einer Speichereinheit (6) Textdaten des Schriftstückes (5) mit den entsprechenden Identifikationsdaten zugeordnet abgespeichert sind,
wobei von einer Auswerteeinheit (8) die Textdaten des identifizierten Schriftstückes (5) mit den Spracherkennungsdaten des Nutzers verglichen werden, um ein Vorlesen eines Textes des Schriftstückes (5) zu erkennen, und
wobei von einer Erfassungseinheit (9) die Zeitdauer, in der ein Vorlesen erfolgt ist, und/oder eine Länge des vorgelesenen Textes, erfasst wird, durchzuführen.
